# EUROPÄISCHE PATENTANMELDUNG

(11) **EP 0 875 817 A1**
(43) Veröffentlichungstag der Anmeldung: **04.11.1998**
(21) Anmeldenummer: 98107878.5
(22) Anmeldetag: 29.04.1998
(51) Int. Cl.: G06F 1/16

(54) **Einrichtung zum Schutz eines Rechnersystems gegen unerlaubtes Ziehen einer Hardware-Komponente**

(30) Priorität: 29.04.1997 DE 19718173
(71) Anmelder: Siemens Nixdorf Informationssysteme AG, 33106 Paderborn (DE)
(72) Erfinder: Depta, Robert, 86179 Augsburg (DE); Fuhrmann, Udo, 86420 Diedorf (DE)
(74) Vertreter: Epping, Wilhelm, Dr.-Ing.

(57) **Zusammenfassung**

Die Erfindung gibt eine Einrichtung zum Schutz eines Rechnersystems (2) gegen unerlaubtes Ziehen einer Hardware-Komponente (1), z.B. einer Wechsel-Festplatte, eines mit während des Betriebs austauschbaren Hardware-Komponenten versehenen Rechners an, wobei die austauschbare Hardware-Komponente eine elektrisch steuerbare, mechanisch wirksame Verriegelung aufweist, die nur vom Rechnersystem oder bei Nichtvorhandensein des vorgesehenen Rechner-Versorgungsstroms aufgehoben wird. Die Einrichtung läßt sich bei Rechnersystemen mit austauschbaren Hardware-Komponenten, einsetzen.

## Beschreibung

Die Erfindung bezieht sich auf eine Einrichtung gemäß dem Oberbegriff des Patentanspruchs 1.

Bei Rechnersystemen, die im oberen Leistungsbereich angesiedelt sind, entwickelt sich die Möglichkeit des Austauschens von Hardware-Systemkomponenten während des laufenden Betriebs mittlerweile zum Standardverhalten. Inzwischen werden auch Standardrechner mit diesem vorteilhaften Attribut (Hot-Swap bzw. Hot-Replace) ausgestattet.

Die zu einem Austausch oder nur für eine Entnahme vorgesehenen Hardware-Komponenten werden vom System, z.B. vom Server Management oder von controller-spezifischen Agenten gekennzeichnet oder markiert. Diese Kennzeichnung bzw. Markierung kann auf dem Bildschirm des jeweiligen Rechners erfolgen und/oder auch mittels optischer Signale, z.B. durch LEDs, an der jeweiligen Hardware-Komponente dem Benutzer bekanntgegeben werden.

Bei RAID-Systemen (Redundant Array of Inexpensive Disks = redundante Ansammlung von preisgünstigen Festplatten) wird die optische Anzeige beispielsweise zum Markieren einer zum Austauschen vorgesehenen Festplatte verwendet. Diese bekannte, auf einer Anzeige beruhende Schutzvorkehrung verhindert aber nicht die Möglichkeit des Auftretens eines Benutzerfehlers, der zum Aufhängen oder Absturz des ganzen Systems beim Ziehen einer nicht zum Ziehen vorgesehenen Hardware-Komponente, z.B. einer Festplatte, führen kann.

Der Erfindung liegt die Aufgabe zugrunde, eine einfache und zweckmäßige Maßnahme anzugeben, durch welche ein Rechnersystem vor Abstürzen und Aufhängvorgängen geschützt wird, die auf eine Fehlbedienung des Gerätes beim Austauschen von Hardware-Gerätekomponenten während des laufenden Betriebs zurückzuführen sind.

Diese Aufgabe wird bei einer gattungsgemäßen Einrichtung durch die im kennzeichnenden Teil des Patentanspruchs 1 angegebenen Merkmale gelöst. Danach haben alle Systemkomponenten, bei denen die Möglichkeit eines Austausches während des laufenden Betriebs im System vorgesehen ist, eine elektrisch ansteuerbare mechanische Verriegelung, die erst vom System selbst, nachdem dort besondere Sicherungsprozeduren abgewickelt worden sind, oder beim Netzausfall oder Netzabschalten aufgehoben wird.

Zweckmäßige und vorteilhafte Weiterbildungen sowie Ausführungsmöglichkeiten der Einrichtung nach der Erfindung sind in den Unteransprüchen angegeben.

Danach kann die mechanisch wirksame Verriegelung entweder ständig aktiv sein oder erst mittels zusätzlicher Aktivierungsschaltungen bei Annäherung oder bei direkter Berührung einer Hand mit der Ziehvorrichtung der austauschbaren Hardware-Komponente aktiviert werden. Die zuletzt angegebene Möglichkeit erfordert den Einsatz eines oder mehrerer Sensoren. Dazu können - je nach Anwendung - geeignet ausgebildete Näherungssensoren, z.B. optischer oder akustischer (Ultraschall) Art, oder Berührungssensoren benutzt werden.

Die durch die Erfindung angegebenen Maßnahmen und die Weiterbildungen sichern das Rechnersystem also gegenüber Abstürzen und Aufhängungsstörungen, die auf eine Fehlbedienung des Gerätes beim Austauschen von Hardware-Komponenten während des laufenden Betriebs zurückzuführen sind.

Die Erfindung und Weiterbildungen davon werden im folgenden anhand eines in einer Figur dargestellten vorteilhaften Ausführungsbeispiels erläutert.

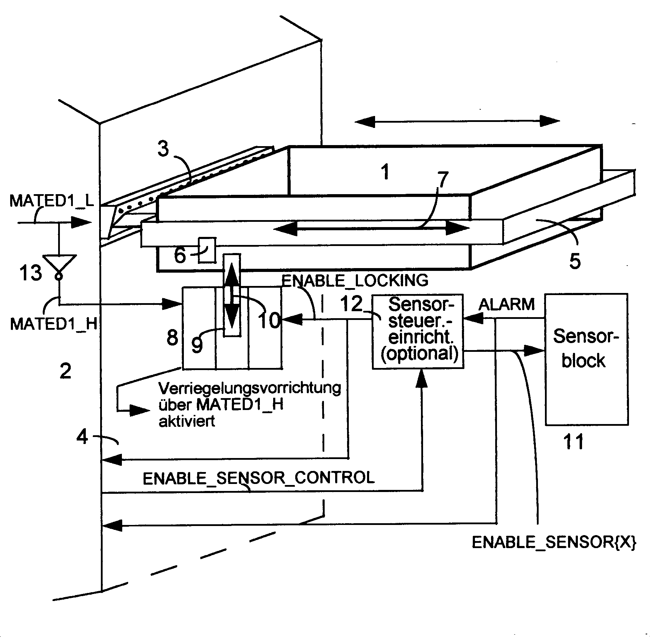

Die Figur zeigt in einer schematischen Schrägansicht eine Vorrichtung zum Anbinden einer Hardware-Komponente an ein Rechnersystem mittels einer Steckverbindung in zeichnerischer Kombination mit einer Blockschaltbilddarstellung einer dazugehörigen Einrichtung zur Verriegelung.

Die Verbindung zwischen einer austauschbar ausgebildeten Hardware-Komponente 1, z.B. einer Festplatte, und einem Rechnersystem 2 erfolgt im Ausführungsbeispiel über eine Steckverbindung 3, die nach der sogenannten SCA2-Steckverbindungs-Spezifikation ausgeführt ist. Im Beispiel ist die Steckverbindung 3 an der Rückseite 4 des Rechnersystems 2 vorgesehen und erfordert somit beim Entnehmen der Hardware-Komponente 1 ein Ziehen nach hinten. Es kann aber prinzipiell z.B. auch eine Anbringung der austauschbaren Hardware-Komponente 1 an der Vorderseite des Rechnersystems erfolgen.

Als Ziehvorrichtung 5 zum schubladenartigen Herausziehen der Hardware-Komponente 1 dient im Ausführungsbeispiel eine umlaufende Griffvorrichtung, die einen Arretierungsvorsprung 6 zum Zwecke der Verriegelung aufweist. Ein an der Ziehvorrichtung 5 eingezeichneter Doppelpfeil 7 deutet an, in welcher Richtung die Hardware-Komponente 1 beim Austausch, d.h. beim Ziehen aus der Steckverbindung 3 und beim Hineinstecken in die Steckverbindung 3, zu bewegen ist.

Ein tatsächliches Herausziehen der Hardware-Komponente 1 aus der Steckverbindung 3 wird durch eine mechanische Verriegelungsvorrichtung 8 verhindert, die elektrisch gesteuert wird. Im Verriegelungszustand ragt ein Riegel 9 so aus der Verriegelungsvorrichtung 8 hervor, daß der Arretierungsvorsprung 6 beim Ziehen der Hardware-Komponente 1 sogleich gegen den Riegel 9 anschlägt, was ein weiteres Herausziehen und somit eine Trennung der Steckverbindung 3 sicher verhindert.

Der Riegel 9 ist längsbeweglich ausgebildet, was durch einen am Riegel 9 eingezeichneten Doppelpfeil 10 angedeutet werden soll. Die Bewegung des Riegels 9 der Verriegelungsvorrichtung 8 wird durch ein elektrisches Steuersignal veranlaßt, das in der Figur von der linken Seite an die Verriegelungsvorrichtung 8 oder optional von der rechten Seite herangeführt wird.

Die mechanische Verriegelung kann bis zu ihrer durch das Rechnersystem 2 oder durch eine Netzabschaltung veranlaßten Aufhebung entweder ständig aktiv sein oder optional erst mittels zusätzlicher Aktivierungsschaltungen, im Ausführungsbeispiel sind dies ein Sensorblock 11 und eine Sensorsteuerungseinrichtung 12, bei Näherung einer Hand an die Ziehvorrichtung 5 oder beim direkten Kontakt einer Hand mit der Ziehvorrichtung 5 aktiviert werden.

Speziell für das Steuern des vorstehend erwähnten ständigen Aktivierungszustand der Verriegelungsvorrichtung 8 eignet sich das sogenannte MATED1-Signal, das bei der SCA2- Steckverbindungs-Spezifikation eingeführt wurde. Bei anders gearteten Steckverbindungen muß die Kommunikation mit dem Controller der jeweiligen Hardware-Komponente 1, z.B. einem Festplatten-Controller, über kurzzeitige Bus-Signale geführt werden, beispielsweise bei SCSI-Steckverbindungen über den SCSI-Reset oder über bestimmte SCSI-Kommandos.

Mittels MATED1-Signals der Polarität LOW (MATED1_LOW-Signal wird der Controller der jeweiligen Hardware-Komponente 1, im Beispiel der Festplatten-Controller, darüber informiert, daß der Hardware-Komponente 1, im Beispiel der Festplatte, alle notwendigen Signale und Spannungen vom Rechnersystem 2 zur Verfügung gestellt worden sind, womit die Anbindung an das Rechnersystem 2 abgeschlossen ist. Beim Rücksetzen des MATED1_LOW-Signals in den Zustand MATED1-HIGH bei Verwendung einer gemäß der SCA2-Spezifikation aufgebauten Steckverbindung 3, soll der Controller der betreffenden Hardware-Komponente 1, im Beispiel also eines Festplatten-Controllers, spezielle Sicherungsprozeduren starten, um die Hardware-Komponente 1, im Beispiel also die Festplatte, zum Abkoppeln vom Rechnersystem 2 vorzubereiten.

Dadurch, daß nach der SCA2-Steckverbindungs-Spezifikation das MATED1_LOW-Signal in seinem LOW-Zustand aktiviert werden kann, ist es bei einem Rechnersystem 2 mit einer permanenten Ansteuerung der Verriegelungsvorrichtung 8 erforderlich, zur Steuerung der letzten und damit die Wirkung hervorrufenden Stufe der mechanischen Verriegelungsvorrichtung 8 ein Signal zu verwenden, das in seinem HIGH-Zustand aktiv ist.

Im ausgeschalteten Zustand oder beim Übergang zum aktiven Zustand des Rechnersystems 2 hat man dann die Möglichkeit, automatisch beim Sinken der Spannung die Verriegelung 10 aufzuheben, eine austauschbar ausgebildete Hardware-Komponente 1 herauszuziehen und vom Rechnersystem 2 ohne Auftreten von Störungen (Absturz oder Aufhängungsvorgang) zu entnehmen.

Die Verriegelungsvorrichtung 8 wird dann entsprechend einer solchen Ansteuerungsweise ausgewählt und angepaßt. Zur Ansteuerung der Verriegelungsvorrichtung 8 wird somit das MATED1_LOW-Signal des Rechnersystems 2 mittels einer Invertierschaltung 13 in ein MATED1_HIGH-Signal negiert und in dieser negierten Form der Verriegelungsvorrichtung 8 zur Steuerung des Riegels 9 zugeführt. Diese Eigenschaft ermöglicht auch das Ziehen der Hardware-Komponente 1 in einem ausge-schalteten Zustand, d.h. bei Trennung des Rechnersystems 2 von der Netzstromversorgung, da sich dann das MATED1_HIGH-Signal in seinem LOW-Zustand befindet und inaktiv ist.

Die Verknüpfung dieses MATED1_LOW-Signals mit einer mechanischen Steuerung der Verriegelung einer austauschbaren Hardware-Komponente sowie die elektrisch ansteuerbare Verriegelung einer Ziehvorrichtung für austauschbar ausgebildete Hardware-Komponenten sind in der SCA2-Steckverbindungs-Spezifikation nicht vorgesehen und sind deswegen als eine besonders vorteilhafte und zweckmäßige Weiterbildung der Erfindung anzusehen.

Die Verriegelungsvorrichtung 8, deren bewegbarer Riegel 9 mit dem Arretierungsvorsprung 6 an der Ziehvorrichtung 5 zusammenwirkt, läßt sich prinzipiell an jeder beliebigen Stelle der schubladenartig betätigbaren Ziehvorrichtung 5 montieren.

Aus der Figur sind die Funktionseinheiten der Ansteuerungsschaltungen für die Verriegelungsvorrichtung 8 sowie die einzelnen Signale und Signalwege zu entnehmen. Im folgenden werden die Signale und ihre Bedeutungen im Zusammenwirken mit den einzelnen Funktionseinheiten im einzelnen beschrieben.

Das MATED1_LOW-Signal dient nach der SCA2-Steckverbindungs-Spezifikation als Informationssignal für den Controller der austauschbaren Hardware-Komponente 1, also im Beispiel einer Festplatte.

Das MATED1_HIGH-Signal, das durch die Negierung des vorstehend erläuterten MATED1-LOW-Signals in der Invertierschaltung 13 entsteht, wird der Verriegelungsvorrichtung 8 zugeführt und betätigt den dortigen Riegel 9 so, daß die an der Hardware-Komponente 1 angebrachte Ziehvorrichtung 5 mechanisch in Zugrichtung durch den betätigten Riegel 9, an welchen dann der Arretierungsvorsprung 6 anschlägt, gesperrt und somit eine Auftrennung der Steckverbindung 3 und eine daraus folgende Störung im Rechnersystem 2 sicher unterbunden wird.

Durch ein Aktivierungssignal ENABLE_SENSOR_CONTROL, das aus dem Rechnersystem 2 der eingebauten Sensorsteuerungseinrichtung 12 bei entsprechendem Wunsch zugeführt wird, läßt sich eine optionale Sensorüberwachung aktivieren.

Ein Verriegelungssignal ENABLE-LOCKING wird von der eingebauten Sensorsteuerungseinrichtung 12 der Verriegelungsvorrichtung 8, aber auch dem Rechnersystem 2 zugeführt, da die Überwachung eines Systemzustandes zur Ansteuerung der Verriegelungsvorrichtung 8 erforderlich ist. Bei Systemen ohne eine optionale Sensorsteuerungseinrichtung 12 ist das ENABLE_LOCKING-Signal ständig aktiv.

Ein Sensor-Aktivierungssignal ENABLE_SENSOR{X} wird von der Sensorsteuerungseinrichtung 12 zum Sensorblock 11 geführt und aktiviert dort einen bzw. mehrere Überwachungssensoren, z.B. Berührungs- oder Näherungssensoren.

Ein vom Sensorblock 11 zur Sensorsteuerungseinrichtung 12 geleitetes ALARM-Signal bedeutet, daß der Sensor bzw. die Sensoren im Sensorblock 11 aktiviert worden sind und eine Person über die Ziehvorrichtung 5 die austauschbar ausgebildete Hardware-Komponente 1 wie eine Schublade ziehen möchte. Das Rechnersystem 2 muß nun entscheiden, ob die Hardware-Komponente 1 zum Ziehen freigegeben wird oder nicht. Die Hardware-Komponente 1 kann dann zum Ziehen freigegeben werden, wenn das Rechnersystem 2 die zum Abkoppeln vom Rechnersystem 2 erforderlichen Sicherungsprozeduren vorbereitet hat oder dort keine Netzstromversorgung z.B. aufgrund eines Stromausfalls oder einer Stromabschaltung mehr vorliegt.

## Patentansprüche

1. Einrichtung zum Schutz eines Rechnersystems gegen unerlaubtes Ziehen einer Hardware-Komponente, z.B. einer Wechsel-Festplatte, eines mit einer oder mehreren während des Betriebs austauschbaren Hardware-Komponenten versehenen Rechners, **dadurch gekennzeichnet,** daß eine während des Betriebs austauschbare Hardware-Komponente (1) eine elektrisch steuerbare, mechanisch wirksame Verriegelung aufweist, die nur vom Rechnersystem (2) oder bei Nichtvorhandensein des vorgesehenen Versorgungsstroms aufgehoben wird.

2. Einrichtung nach Anspruch 1, **dadurch gekennzeichnet,** daß die mechanische Verriegelung permanent aktiv ist.

3. Einrichtung nach Anspruch 2, **dadurch gekennzeichnet,** daß die austauschbare Hardware-Komponente (1) mittels einer nach der SCA2-Spezifikation ausgeführten Steckverbindung (3) mit dem Rechnersystem (2) verbunden ist, daß zur elektrischen Steuerung der Verriegelung das sogenannte MATED1_LOW-Signal, das den jeweiligen Hardware-Controller hinsichtlich einer abgeschlossenen vorschriftsmäßigen Anbindung der zugeordneten Hardware-Komponente an das Rechnersystem informiert, verwendet wird, daß das MATED1_LOW-Signal invertiert wird, so daß bei einer die Verriegelung schlußendlich mechanisch ausführenden Verriegelungsvorrichtung (8) durch das MATED1_HIGH-Signal der Verriegelungszustand aktiviert ist und im Falle des Vorliegens des MATED1_HIGH-Signals = LOW der ein Ziehen der jeweiligen Hardware-Komponente zulassende Entriegelungszustand vorliegt, und daß beim operatorseitig veranlaßten Rücksetzen dieses Signals der jeweils zugeordnete Hardwarekomponenten-Controller spezielle Sicherungsprozeduren startet, um die betreffende Hardware-Komponente zum vorschriftsmäßigen Abkoppeln vom Rechnersystem zu veranlassen.

4. Einrichtung nach Anspruch 2, **dadurch gekennzeichnet,** daß für den Fall, daß die austauschbare Hardware-Komponente (1) mittels einer herkömmlichen Steckverbindung (3) mit dem Rechnersystem (2) verbunden ist, die Kommunikation mit dem jeweiligen Hardwarekomponenten-Controller über Bus-Signale geführt wird, die den Hardwarekomponenten-Controller hinsichtlich einer abgeschlossenen vorschriftsmäßigen Anbindung der zugeordneten Hardware-Komponente an das Rechnersystem informieren, daß bei Vorliegen einer abgeschlossenen vorschriftsmäßigen Anbindung an eine mechanische Verriegelungsvorrichtung (8) ein elektrisches Verriegelungssignal abgegeben wird, das den Verriegelungszustand aktiviert, und daß beim operatorseitig veranlaßten Rücksetzen dieses Signals der jeweils zugeordnete Hardwarekomponenten-Controller spezielle Sicherungsprozeduren startet, um die betreffende Hardware-Komponente zum vorschriftsmäßigen Abkoppeln vom Rechnersystem zu veranlassen.

5. Einrichtung nach Anspruch 1, **dadurch gekennzeichnet,** daß zur Aktivierung der mechanischen Verriegelung eine zusätzliche, optionale Aktivierungseinrichtung vorgesehen ist, die beim direkten Kontakt einer Hand mit der Ziehvorrichtung einer austauschbaren Hardware-Komponente oder bereits bei Annäherung einer Hand an die Ziehvorrichtung anspricht.

6. Einrichtung nach Anspruch 5, **dadurch gekennzeichnet,** daß die Aktivierungseinrichtung eine Sensoreinrichtung mit einem oder mehreren Näherungssensoren optischer, akustischer (Ultraschall) oder anderer geeigneter Art aufweist.

7. Einrichtung nach Anspruch 5, **dadurch gekennzeichnet,** daß die Aktivierungseinrichtung eine Sensoreinrichtung mit einem oder mehreren Berührungssensoren aufweist.

8. Einrichtung nach einem der Ansprüche 5 bis 7, **dadurch gekennzeichnet,** daß die optionale Aktivierungseinrichtung einen den bzw. die Sensoren enthaltenden Sensorblock (11) und eine Sensorsteuerungseinrichtung (12) aufweist, daß zur Aktivierung der optionalen Sensorüberwachung vom Rechnersystem (2) an die Sensorsteuerungseinrichtung ein Aktivierungssignal (ENABLE_SENSOR_CONTROL) herangeführt wird, daß bei einer eingebauten Sensorsteuerungseinrichtung eine elektrische Überwachung eines Rechnersystemzustands zur elektrischen Ansteuerung einer die Verriegelung mechanisch vornehmenden Verriegelungsvorrichtung (8) mit einem Verriegelungssignal (ENABLE_LOCKING) vorgesehen ist, das bei Nichtvorhandensein einer Sensorsteuerungseinrichtung ständig aktiv ist, daß zur Aktivierung des Sensors bzw. der Sensoren von der Sensorsteuerungseinrichtung an den Sensorblock ein Sensor-Aktivierungssignal (ENABLE_SENSOR{X}) übertragen wird und daß bei Aktivierung des Sensors bzw. der Sensoren im Sensorblock, d.h. bei beabsichtigtem Ziehen der austauschbaren Hardware-Komponente, ein Signal (ALARM) an die Sensorsteuerungseinrichtung und an das Rechnersystem geführt wird, wobei letzteres entscheidet, ob die betreffende Hardware-Komponente (2) zum Ziehen freigegeben wird oder nicht.

9. Einrichtung nach einem der vorhergehenden Ansprüche, **gekennzeichnet durch** eine Anwendung bei einem Rechnersystem mit einem sogenannten RAID-Festplattensystem (Redundant Array of Inexpensive Disks = redundante Ansammlung von preisgünstigen Festplatten).
